# EUROPÄISCHE PATENTANMELDUNG

(11) **EP 4 520 675 A1**
(43) Veröffentlichungstag der Anmeldung: **12.03.2025**
(21) Anmeldenummer: 24197346.0
(22) Anmeldetag: 29.08.2024
(51) Int. Cl.: B65D 21/08, B65D 25/04

(54) **MEHRWEGVERPACKUNG UND MEHRWEGVERPACKUNGSSYSTEM**

(30) Priorität: 31.08.2023 DE 202023104991 U
(71) Anmelder: Xpack green logistics GmbH & Co. KG, 44319 Dortmund (DE)
(72) Erfinder: Hinz, Simon, 44263 Dortmund (DE); Preis, Lothar, 44141 Dortmund (DE)
(74) Vertreter: dompatent von Kreisler Selting Werner - Partnerschaft von Patent- und Rechtsanwälten mbB

(57) **Zusammenfassung**

Eine Mehrwegverpackung (10), mit einem Bodenelement (12), einem Deckenelement (14), mindestens einer zwischen dem Bodenelement (12) und dem Deckenelement (14) angeordneten Außenwand, sodass durch das Bodenelement (12), das Deckenelement (14) und die mindestens eine Außenwand eine Außenhülle (18) zur umschließenden Verpackung für das Transportgut ausgebildet ist, und einer innerhalb der Außenhülle (18) angeordneten Zwischenwand (20) zur Unterteilung der Verpackung in mehrere Fächer (24), wobei die mindestens eine Außenwand und/oder die mindestens eine Zwischenwand (20) expandierbar ausgeführt ist und / oder ein Zwischenboden (22) eine weitere, Unterteilung des Verpackungsvolumens ermöglicht. Ferner betrifft die Erfindung ein Mehrwegverpackungssystem.

## Beschreibung

Die Erfindung betrifft eine Mehrwegverpackung und ein Mehrwegverpackungssystem.

Zum Transport, insbesondere Versand, von Gegenständen werden zumeist Einwegverpackungen, bspw. Kartons eingesetzt. Problematisch ist hierbei ein hoher Ressourcenverbrauch in der Herstellung und Entsorgung der Verpackungen.

Weitergehend existieren Mehrwegverpackung zum Transport von Gegenständen. Nachteilig hieran ist, dass diese Mehrwegverpackung für spezifische Gegenstände, insbesondere spezifische Gegenstandsmaße, vorgesehen sind.

Ferner kommt es beim Transport bspw. aufgrund von unzureichender Dämpfung und/oder Fixierung der Gegenstände zu Beschädigungen.

Ein weiteres Problem ergibt sich durch die Standardgrößen der aktuellen Verpackungen, da es hierdurch zu Platzverschwendung und somit ebenfalls zu einem hohen Ressourcenverbrauch kommt.

Aufgabe der Erfindung ist es eine Mehrwegverpackung und ein Mehrwegverpackungssystem zu schaffen, wobei der Transport von Transportgütern verbessert ist.

Die Lösung der Aufgaben erfolgt erfindungsgemäß durch eine Mehrwegverpackung gemäß Anspruch 1 und ein Mehrwegverpackungssystem gemäß Anspruch 17.

Bei der erfindungsgemäßen Mehrwegverpackung handelt es sich insbesondere um eine Mehrwegtransportverpackung zum Transport von Flaschen, Elektro-Platinen oder Lebensmittel. Die Mehrwegverpackung ist bevorzugt zum Versand, insbesondere vermittels Paketdiensten, ausgeführt. Die Mehrwegverpackung weist ein Bodenelement, ein Deckenelement, und mindestens einer zwischen dem Bodenelement und dem Deckenelement angeordneten Außenwand auf, sodass durch das Bodenelement, das Deckenelement und die mindestens eine Außenwand eine Außenhülle zur, insbesondere allseitig, umschließenden Verpackung für das Transportgut ausgebildet ist. Vorzugsweise ist mindestens eine Außenwand mit dem Bodenelement und/oder dem Deckenelement verbunden, bevorzugt fest verbunden, besonders bevorzugt unlösbar verbunden. Insbesondere ist die mindestens eine Außenwand mit dem Bodenelement und/oder dem Deckenelement gefügt, bspw. vernäht und/oder verklebt und/oder verschweißt und/oder einstückig aus demselben Material hergestellt. Möglich ist es bspw., dass die Mehrwegverpackung eine vorzugsweise einzige ringförmige Außenwand aufweist. Bevorzugt kann die Mehrwegverpackung mehrere bspw. drei oder vier, insbesondere zusammengesetzte, Außenwände aufweisen. Insbesondere sind vier einzelne ggf. miteinander verbundene Außenwände vorgesehen, sodass eine im Wesentlichen quaderförmige Mehrwegverpackung ausgebildet ist. Erfindungsgemäß ist das Transportgut somit insbesondere allseitig von der Verpackung umschlossen. Ferner weist die Mehrwegverpackung mindestens eine, zumindest teilweise, innerhalb der Außenhülle angeordnete Zwischenwand zur Unterteilung der Verpackung in mehrere Fächer auf. Die Fächer sind vorzugsweise zur Aufnahme der Transportgüter, insbesondere zur Aufnahme verschiedener, bspw. verschieden großer, Transportgüter ausgeführt. Vorzugsweise können die mehreren Fächer gleichgroß oder unterschiedlich groß sein. Insbesondere bildet die mindestens eine Zwischenwand Gefache innerhalb der Außenhülle aus. Die mindestens eine Zwischenwand ist vorzugsweise zwischen dem Bodenelement und dem Deckenelement angeordnet, vorzugsweise mit dem Bodenelement und/oder dem Deckenelement verbunden. Vorzugsweise ist die mindestens eine Zwischenwand senkrecht zum Bodenelement und/oder dem Deckenelement ausgeführt. Die mindestens eine Außenwand und/oder die mindestens eine Zwischenwand ist expandierbar. Expandierbar meint hierbei insbesondere, dass die Außenwand und/oder Zwischenwand höhenverstellbar ausgeführt ist, sodass eine Höhe der Außenwand und/oder der Zwischenwand vergrößert und verkleinert werden kann. Über die Expandierbarkeit ist insbesondere umgesetzt, dass die Mehrwegverpackung expandierbar, bspw. zusammenklappbar und/oder zusammenfaltbar ausgeführt ist. Bevorzugt ist die Mehrwegverpackung zumindest teilweise flexible ausgeführt. Es ist bevorzugt, dass die Mehrwegverpackung ein oder mehrere Flaschen und/oder ein oder mehrere Elektro-Platinen und/oder ein oder mehrere Lebensmittel in der Mehrwegverpackung aufgenommene aufweist.

In bevorzugter Ausführung ist das Bodenelement, das Deckenelement und/oder ein Querschnitt der Außenhülle im Wesentlichen rechteckig ausgebildet. Vorzugsweise weist somit die Außenhülle und/oder die Mehrwegverpackung eine Quaderform auf.

In bevorzugter Ausführung ist die mindestens eine Außenwand und/oder die mindestens eine Zwischenwand als Faltenbalg ausgebildet. Durch die Ausführung als Faltenbalg ist eine besonders bevorzugte Umsetzung der Expandierbarkeit verwirklicht.

In bevorzugter Ausführung weist die Mehrwegverpackung mindestens eine Vorspannvorrichtung auf, die ausgeführt ist, die mindestens eine Außenwand und/oder die mindestens eine Zwischenwand kontrahiert vorzuspannen. Kontrahiert meint hierbei insbesondere, dass die Außenwand und/oder Zwischenwand in einem, vorzugsweise minimal, verkleinerten Zustand vorgespannt gehalten wird. Insbesondere ist die Vorspannvorrichtung ausgeführt zur Umsetzung eines Selbsteinzugs und/oder Selbstzusammenzugs der expandierbaren Außenwand und/oder expandierbaren Zwischenwand, sowie bevorzugt der Au-ßenhülle und/oder der mehreren Fächer, besonders bevorzugt der Mehrwegverpackung an sich. Es ist bevorzugt, dass die Vorspannvorrichtung auf Zug vorgespannt ist. Durch die Vorspannvorrichtung ist insbesondere eine umschließende und/oder anliegende und/oder fixierende Aufnahme der Transportgüter, bevorzugt unterschiedlicher Transportgüter, umgesetzt, da sie die Mehrwegverpackung entsprechend bündig umschließt.

In bevorzugter Ausführung weist die Vorspannvorrichtung mindestens eine Zugfeder und/oder mindestens ein Zugband, bspw. ein Gummiband auf. Die Zugfeder und/oder das Zugband sind insbesondere auf Zug vorgespannt. Es ist bevorzugt, dass die Vorspannvorrichtung, insbesondere die Zugfeder und/oder das Zugband, verbunden mit der mindestens einen Außenwand und/oder der mindestens einen Zwischenwand ist. Vorzugsweise ist hierbei eine feste, insbesondere untrennbare Verbindung umgesetzt, wobei die Vorspannvorrichtung, insbesondere die Zugfeder und/oder das Zugband, bevorzugt mit der Außenwand und/oder der Zwischenwand gefügt, bspw. vernäht und/oder verklebt und/oder verschweißt und/oder einstückig ist.

In bevorzugter Ausführung weist die Mehrwegverpackung eine, insbesondere mit dem Bodenelement und/oder dem Deckenelement verbundene, Zurrvorrichtung zum, vorzugsweise kontrahierten, Zusammenzurren der Mehrwegverpackung auf. Vorzugsweise ist die Zurrvorrichtung an dem Bodenelement und/oder dem Deckenelement befestigt. Die Zurrvorrichtung weist insbesondere einen, vorzugsweise verschließbaren, Riemen auf.

In bevorzugter Ausführung ist die mindestens eine Zwischenwand zumindest einseitig lösbar mit der Außenhülle, vorzugsweise dem Bodenelement und/oder dem Deckenelement, verbunden. Besonders bevorzugt ist es, dass die mindestens eine Zwischenwand auf der einen Seite lösbar mit der Außenhülle, vorzugsweise dem Bodenelement und dem Deckenelement, und auf der anderen Seite fest, bevorzugt unlösbar, besonders bevorzugt gefügt, bspw. vernäht und/oder verklebt und/oder verschweißt und/oder einstückig mit der Außenhülle, vorzugsweise dem Bodenelement und/oder dem Deckenelement, verbunden ist. Durch die Lösbarkeit der mindestens einen Zwischenwand ist insbesondere vorteilhaft umgesetzt, dass der Innenraum der Außenhülle freilegbar ist, sodass vorzugsweise der gesamte Innenraum, also bevorzugt im Wesentlichen das gesamte Innenvolumen der Außenhülle zur Aufnahme von Gegenständen genutzt werden kann. Somit kann bspw. mindestens eine weitere, insbesondere identische Mehrwegverpackung, in der, bevorzugt flexiblen, Mehrwegverpackung aufgenommen werden. Somit ist insbesondere eine Nestfunktion der Mehrwegverpackung für mindestens eine weitere, bevorzugt mehrere weitere Mehrwegverpackungen umgesetzt. Die Zwischenwand ist insbesondere bewegbar, vorzugsweise relativ zur Außenhülle und/oder innerhalb der Außenhülle ausgeführt.

In bevorzugter Ausführung ist die Lösbarkeit der Zwischenwand durch einen Klettverschluss und/oder einen Knopfverschluss und/oder einen Ösenverschluss und/oder einen Magnetverschluss umgesetzt. Bevorzugt weist somit die Zwischenwand und/oder die Außenhülle, vorzugsweise das Bodenelement und/oder das Deckenelement, mindestens eine der folgenden Verschlussvorrichtungen auf: einen Klettverschluss, einen Knopfverschluss, einen Magnetverschluss oder einen Ösenverschluss. Bevorzugt weist die Zwischenwand ein Teil dieser Verschlussvorrichtung und die Außenhülle, vorzugsweise das Bodenelement und/oder das Deckenelement, ein entsprechendes Gegenstück auf.

In bevorzugter Ausführung weist die Mehrwegverpackung mindestens einen Zwischenboden zur weiteren Unterteilung der Verpackung in mehrere Fächer auf. Der mindestens eine Zwischenboden ist vorzugsweise parallel zu dem Bodenelement und/oder dem Deckenelement ausgeführt. Vorzugsweise ist der mindestens eine Zwischenboden zur Fixierung einlegbar in Falten des Faltenbalgs ausgeführt.

In bevorzugter Ausführung ist der mindestens eine Zwischenboden mit der mindestens einen Zwischenwand verbunden, insbesondere fest verbunden. Bevorzugt ist der Zwischenboden mit der Zwischenwand gefügt, bspw. vernäht und/oder verklebt und/oder verschweißt und/oder einstückig ausgeführt. Es ist bevorzugt, dass der Zwischenboden gemeinsam beweglich, insbesondere relativ zur Außenhülle, mit der Zwischenwand ausgeführt ist. Der Zwischenboden ist insbesondere lose von der mindestens einen Seitenwand ausgeführt und/oder lösbar verbindbar mit der mindestens einen Seitenwand. Bevorzugt ist der Zwischenboden in einem mittigen Bereich der Zwischenwand mit der Zwischenwand verbunden.

In bevorzugter Ausführung ist eine der Außenwände oder ein Teil einer Außenwand zum Öffnen und Verschließen der Verpackung klappbar mit dem Bodenelement oder dem Deckenelement verbunden. Bevorzugt ist es insbesondere, dass diese Außenwand klappbar fest mit dem Deckenelement verbunden und lösbar verbindbar mit dem Bodenelement ist; und/oder diese Außenwand klappbar fest mit dem Bodenelement verbunden und lösbar verbindbar mit dem Deckenelement ist. Die klappbare Außenwand bildet somit insbesondere vorteilhaft einen verschließbaren Deckel für die Mehrwegverpackung aus. Die Lösbarkeit ist insbesondere mittels eines Verschlusses umgesetzt. Der Verschluss weist bspw. einen Schnellverschluss, einen Schnappverschluss, einen Riegel, einen Klettverschluss, einen Knopfverschluss, einen Ösenverschluss, einen Reißverschluss und/oder einen Magnetverschluss auf.

In bevorzugter Ausführung, insbesondere alternativ oder zusätzlich zu der Klappbarkeit der Außenwände, ist das Bodenelement und/oder das Deckenelement zum Öffnen und Verschließen der Mehrwegverpackung, zumindest teilweise, klappbar, vorzugsweise zum Verbinden des Bodenelements mit dem Deckenelements, ausgeführt. Bspw. weist das Bodenelement einen formstabilen Bereich, bspw. eine Platte, und einen flexiblen Bereich, bspw. eine Lasche auf. Weitergehend ist es bevorzugt, dass das Deckenelement, insbesondere einen formstabilen Bereich, bspw. eine Platte, und einen flexiblen Bereich, bspw. eine Lasche, aufweist. Bevorzugt können die flexiblen Bereiche des Deckenelements und des Bodenelements, insbesondere durch ein Aufeinanderzuklappen, miteinander in Verbindung gebracht werden und derart ein Öffnen und Verschließen der Mehrwegverpackung umgesetzt werden. Bspw. können die miteinander verbundenen flexiblen Bereiche des Deckenelements und des Bodenelements durch einen Verschluss miteinander fixiert werden.

In bevorzugter Ausführung weist die Mehrwegverpackung einen Verschluss zum Fixieren der Mehrwegverpackung in einem kontrahierten Zustand auf. Vorzugsweise ist der Verschluss mit dem Bodenelement und/oder dem Deckenelement verbunden, vorzugsweise zum Befestigen des Bodenelements mit dem Deckenelement ausgeführt. Der Verschluss weist bspw. einen Scharnierverschluss einen Schnellverschluss, einen Schnappverschluss, einen Riegel, einen Klettverschluss, einen Knopfverschluss, einen Ösenverschluss, einen Reißverschluss und/oder einen Magnetverschluss auf. Vorzugsweise ist der Verschluss zum Fixieren der Mehrwegverpackung in einem minimalen Packzustand ausgeführt. Durch den Verschluss kann die Mehrwegverpackung insbesondere in einem kontrahiert verschlossenen Zustand fixiert werden. Der Verschluss ist insbesondere mit dem flexiblen Bereich des Deckenelements und/oder des Bodenelements verbunden.

Es ist bevorzugt, dass die Außenwand und/oder die Zwischenwand und/oder der Zwischenboden und/oder das Bodenelement und/oder das Deckenelement Kunststoff aufweist oder daraus besteht. Insbesondere weist die Außenwand und/oder die Zwischenwand und/oder der Zwischenboden und/oder das Bodenelement und/oder das Deckenelement eines oder mehrere der folgenden Materialien auf, besteht vorzugsweise daraus: Polypropylen, vorzugsweise Polypropylengewebe, und/oder, vorzugsweise kompressibler, Schaumstoff und/oder Luftpolsterfolie und/oder Leder. Bevorzugt ist es, dass das Bodenelement und/oder das Deckenelement und/oder der Zwischenboden formstabil ist, bspw. eine formstabile Platte aufweist. Das Bodenelement und/oder das Deckenelement und/oder der Zwischenboden können bspw. Kartonage, insbesondere formfesten Kunststoff, und/oder Metallblech, insbesondere Stahlblech aufweisen, wobei eine Kombination dieser Werkstoffe mit flexiblem Kunststoff und/oder Folie und/oder Gewebe und/oder Leder bevorzugt ist. Die Außenwand und/oder die Zwischenwand und/oder der Zwischenboden und/oder das Bodenelement und/oder das Deckenelement sind insbesondere dämpfend ausgeführt, sodass bspw. zerbrechliche Transportgüter sicher verpackt werden können. Besonders bevorzugt ist es, dass die Mehrwegverpackung derart ausgeführt ist, dass diese am Ende ihres Lebenszyklus (EOL, End of Life) rezyklierbar ist. Insbesondere ist daher die Mehrwegverpackung, vorzugsweise die Außenwand und/oder die Zwischenwand und/oder der Zwischenboden und/oder das Bodenelement und/oder das Deckenelement aus nur einem einzigen rezyklierbaren Material und/oder einer einzigen Materialgruppe gefertigt ist, insbesondere derart, dass sie am Stück rezykliert werden kann und/oder die verschiedenen Elemente am EOL einfach getrennt und dann reykliert werden können.

In bevorzugter Ausführung weist die Mehrwegverpackung eine an einer Außenfläche der Mehrwegverpackung, insbesondere des Bodenelements und/oder des Deckenelements, angeordnete, Etikettenfläche zum Anbringen von Versandetiketten auf. Die Etikettenfläche weist insbesondere eine andere Oberfläche, vorzugsweise mit anderen Hafteigenschaften, als die übrige Außenfläche auf. Dies erlaubt insbesondere, Papieretiketten nach Abschluss eines Transportweges trocken abzuziehen und gleichzeitig wird deren sicheren Halt während des Transports gewährleistet. Bevorzugt können diese Oberflächeneingenschaften durch handelsübliche, klebende sogenannte Etikettenlandeplätze und/oder durch spezielle Beschichtungen und/oder Lackierungen und/oder durch während der Produktion erzeugt, spezielle Rauigkeiten erreicht werden. Der Grund einer abweichenden Oberfläche für Versandetiketten ist insbesondere, dass die Rauigkeit der übrigen Verpackungsoberfläche sicherstellt, dass die verpackten Waren sicher in marktüblichen Pakettransport- und -sortieranlagen verarbeitet werden können. Dies wäre durch zu glatte oder zu raue Oberflächen gefährdet. Somit kann insbesondere vorteilhaft ein Entfernen von Versandetiketten verbessert werden. Die Etikettenfläche ist insbesondere eben und/oder rechteckig.

In bevorzugter Ausführung weist die Mehrwegverpackung eine, insbesondere maschinenlesbare, bspw. einen Barcode und/oder ein RFID-Tag und/oder ein Display aufweisende, Informationsvorrichtung auf. Die Informationsvorrichtung ist insbesondere zur optischen und/oder drahtlosen Informationswiedergabe ausgeführt. Bei dem Display handelt es sich insbesondere um ein E-Paper-Display.

In bevorzugter Ausführung sind sämtliche Einzelteile der Mehrwegverpackung fest miteinander verbunden, sodass diese bei mehrfachen Transport-Umläufen nicht verloren gehen können.

In bevorzugter Ausführung ist die Mehrwegverpackung zur Aufnahme mindestens einer weiteren, vorzugsweise identischen, Mehrwegverpackung, ausgeführt. Insbesondere ist hierzu die Mehrwegverpackung, bevorzugt die Außenhülle, besonders bevorzugt die mindestens eine Außenwand, flexibel ausgeführt, sodass sie zur Aufnahme erweiterbar ist. Die Flexibilität der Mehrwegverpackung ist bspw. über die mindestens eine expandierbare Außenwand, vorzugsweise in Ausführung als Faltenbalg, umgesetzt. Alternativ oder zusätzlich ist es bevorzugt, dass der Innenraum der Mehrwegverpackung, insbesondere der Außenhülle, freilegbar ist, sodass im Wesentlichen der gesamte Innenraum, vorzugsweise im Wesentlichen das gesamte Volumen des Innenraums, zur Aufnahme dient. Die Freilegbarkeit ist insbesondere durch eine Bewegbarkeit und/oder Lösbarkeit von Zwischenwänden und/oder Zwischenböden der Mehrwegverpackung umgesetzt. Die Mehrwegverpackung ist hierbei insbesondere zur zumindest teilweisen, vorzugsweise vollständigen Aufnahme der mindestens einen weiteren Mehrwegverpackung innerhalb der Mehrwegverpackung ausgeführt. Bevorzugt ist es ferner, dass diese Ausführung die Nutzung des nicht unterteilten Innenraums für größere Packstücke erlaubt, in anderen Worten, die selbe Verpackung kann sowohl mit als auch ohne die Gefachstruktur verwendet werden, ohne dass diese entfernt werden muss.

In bevorzugter Ausführung weist die Mehrwegverpackung mindestens ein, vorzugsweise rutschhemmendes, Dämpfungselement auf. Bei dem Dämpfungselement handelt es sich bspw. um ein Kissen. Das Dämpfungselement weist insbesondere Kunststoff auf oder besteht daraus. Das Dämpfungselement ist vorzugsweise mit der Außenwand und/oder der Zwischenwand und/oder dem Zwischenboden und/oder dem Bodenelement und/oder dem Deckenelement verbunden, bspw. daran gefügt, wie z. B. vernäht, verklebt oder verschweißt; darin aufgenommen; und/oder integral damit ausgeführt. Das Dämpfungselement ist insbesondere zur gedämpften Aufnahme der zu transportierenden Güter, bspw. Flaschen, Elektro-Platinen oder Lebensmittel ausgeführt.

Das erfindungsgemäße Mehrwegverpackungssystem weist eine erste Mehrwegverpackung mit einem oder mehreren Merkmalen der erfindungsgemäßen Mehrwegverpackung auf. Ferner weist das Mehrwegverpackungssystem mindestens eine, insbesondere mehrere, weitere Mehrwegverpackung/en auf. Diese mindestens eine weitere Mehrwegverpackung weist vorzugsweise ebenfalls eines oder mehrere Merkmale der erfindungsgemäßen Mehrwegverpackung auf. Die mindestens eine weitere Mehrwegverpackung ist, zumindest teilweise, innerhalb der Außenhülle der ersten Mehrwegverpackung angeordnet, vorzugsweise darin aufgenommen. Vorzugsweise ist die mindestens eine weitere Mehrwegverpackung vollständig innerhalb der ersten Mehrwegverpackung angeordnet. Durch die Aufnahme der mindestens einen weitere Mehrwegverpackung in der ersten Mehrwegverpackung ist insbesondere der Transport von mehreren Leergut-Verpackungen als nur ein Packstück umsetzbar. Dies führt insbesondere zu wesentlichen Einsparungen beim Transport des Leergutes. Bevorzugt ist es, dass zur Anordnung, insbesondere Aufnahme, der mindestens einen weiteren Mehrwegverpackung in der ersten Mehrwegverpackung der Innenraum der ersten Mehrwegverpackung freigelegt und/oder die erste Mehrwegverpackung flexibel ausgeführt ist. Vorzugsweise ist die mindestens eine weitere Mehrwegverpackung, insbesondere minimal, kontrahiert und/oder zusammengezurrt und/oder verschlossen.

Die Erfindung betrifft insbesondere ferner die Verwendung einer Mehrwegverpackung mit einem oder mehreren Merkmalen der erfindungsgemäßen Mehrwegverpackung. Vorzugsweise umfasst die Verwendung der Mehrwegverpackung ein Verpacken von ein oder mehrere Flaschen und/oder ein oder mehrere Elektro-Platinen und/oder ein oder mehrere Lebensmittel in der Mehrwegverpackung.

In bevorzugter Ausführung wird bei der Verwendung der Mehrwegverpackung mindestens ein Transportgut, bevorzugt mehrere Transportgüter, besonders bevorzugt mehrere verschiedene, Transportgüter in der Mehrwegverpackung aufgenommen. Vorzugsweise wird das mindestens eine Transportgut in der Mehrwegverpackung verpackt, bevorzugt in der Mehrwegverpackung transportiert, besonders bevorzugt in der Mehrwegverpackung verschickt.

In bevorzugter Ausführung wird bei der Verwendung der Mehrwegverpackung in der Mehrwegverpackung mindestens eine weitere Mehrwegverpackung, bevorzugt mehrere Mehrwegverpackungen angeordnet, insbesondere aufgenommen. Die mindestens eine weitere Mehrwegverpackung weist vorzugsweise eines oder mehrere Merkmale der erfindungsgemäßen Mehrwegverpackung auf. Es ist bevorzugt, dass ein Freilegen des Innenraums der Mehrwegverpackung, in der die mindestens eine weitere Mehrwegverpackung aufgenommen wird, erfolgt. Vorzugsweise erfolgt ein, insbesondere minimales, Kontrahieren, und/oder Zusammenzurren und/oder Verschließen der mindestens einen weiteren Mehrwegverpackung.

In bevorzugter Ausführung erfolgt bei der Verwendung der Mehrwegverpackung ein Transport, insbesondere Verschicken, von Transportgut mit der Mehrwegverpackung sowie ein anschließender Weiter-, insbesondere Rücktransport, der Mehrwegverpackung. Bei dem Weiter-, insbesondere Rücktransport, der Mehrwegverpackung erfolgt insbesondere ein Transport von mindestens einer weitere Mehrwegverpackung in der Mehrwegverpackung.

Nachfolgend wird die Erfindung anhand bevorzugter Ausführungsformen unter Bezugnahme auf die anliegenden Zeichnungen näher erläutert.

Es zeigen:
- Fig. 1: eine perspektivische Frontansicht auf eine Ausführungsform einer erfindungsgemäßen Mehrwegverpackung,
- Fig. 2: eine perspektivische seitliche Ansicht auf die Mehrwegverpackung aus Fig. 1,
- Fig. 3: die Mehrwegverpackung aus Figur 1 in einem zweiten Zustand, und
- Fig. 4: eine perspektivische Frontansicht auf eine Ausführungsform eines erfindungsgemäßen Mehrwegverpackungssystem mit Ausführungsformen erfindungsgemäßer Mehrwegverpackungen.

Ähnliche oder identische Bauteile oder Elemente werden in den Figuren mit den gleichen Bezugszeichen bzw. Variationen davon (z.B. 16 und 16a, 16b, 16c) identifiziert. Insbesondere zur verbesserten Übersichtlichkeit werden, vorzugsweise bereits identifizierte Elemente nicht in allen Figuren mit Bezugszeichen versehen.

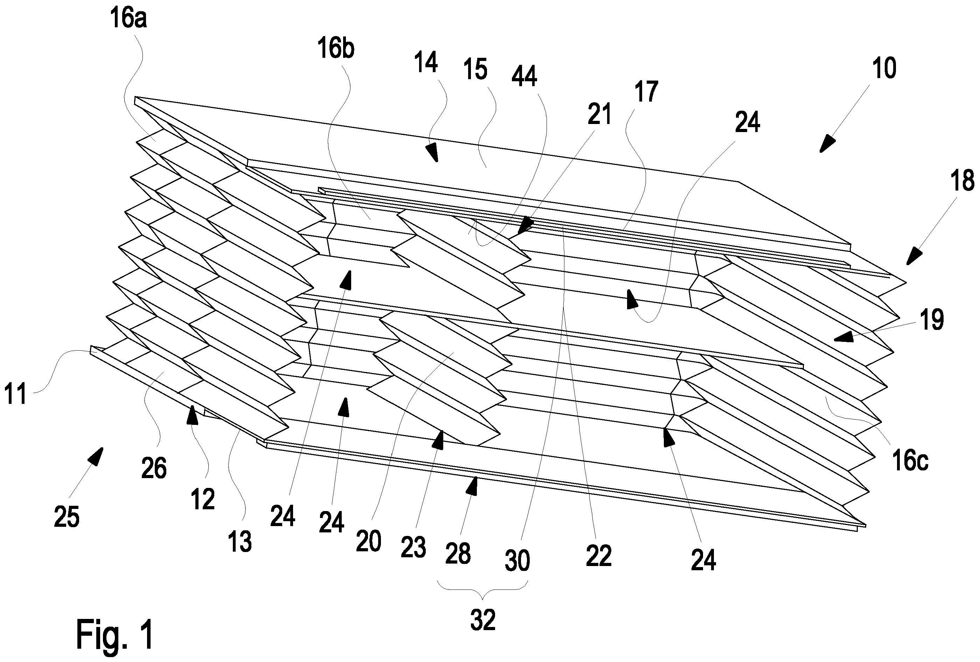

Figur 1 zeigt eine Ausführungsform einer erfindungsgemäßen Mehrwegverpackung 10.

Die Mehrwegverpackung 10 weist ein Bodenelement 12 und ein parallel gegenüberliegendes Deckenelement 14 auf. Zwischen dem Bodenelement 12 und dem Deckenelement 14 sind dargestellt drei Außenwände 16a, 16b, 16c angeordnet, die mit dem Deckenement 14 und dem Bodenelement 12 verbunden, bspw. gefügt oder einstückig ausgebildet sind.

Das Bodenelement 12, das Deckenelement 14 und die Außenwände 16a-16c bilden gemeinsam eine Außenhülle 18 aus. Von der Außenhülle 18 wird ein Innenraum 19 zur Aufnahme von (nicht dargestellten) Transportgütern aufgespannt. Der Innenraum 19 weist somit ein Aufnahmevolumen auf. Durch die Mehrwegverpackung, vorzugsweise die Außenhülle ist somit eine, insbesondere allseitig, umschließende Verpackung für das Transportgut ausgebildet.

Ferner ist, insbesondere in dem Innenraum 19, zwischen dem Bodenelement 12 und dem Deckenelement 14 eine Zwischenwand 20 angeordnet. Die Zwischenwand 20 ist mit dem Bodenelement 12 und dem Deckenelement 14 verbunden. Insbesondere ist eine lösbare Verbindung der Zwischenwand 20 mit der Außenhülle 18 umgesetzt. Bevorzugt ist umgesetzt, dass die Zwischenwand 20 an einer Seite 21 mittels eines Verschlusses 44, bspw. eines Klettverschlusses, lösbar mit dem Deckenelement 14 verbindbar ist. An der anderen Seite 23 ist die Zwischenwand 20 insbesondere fest, bspw. gefügt oder einstückig, mit dem Bodenelement 12 verbunden. Andererseits ist es jedoch bspw. auch möglich, dass die Zwischenwand 20 lösbar mit dem Bodenelement 12 verbindbar ist oder lösbar mit dem Bodenelement 12 und dem Deckenelement 14 verbindbar ist.

Mit der Zwischenwand 20 ist, insbesondere in einem mittigen Bereich, ein, vorzugsweise formstabiler, Zwischenboden 22 verbunden. Die Verbindung zwischen Zwischenboden 22 und Zwischenwand 20 ist insbesondere fest, bspw. gefügt oder einstückig ausgeführt.

Durch die Zwischenwand 20 und den Zwischenboden 22 wird der Innenraum 19 in vier Fächer 24 unterteilt. Dargestellt weisen die Fächer 24 die gleiche Form und Größe auf. Möglich ist andererseits insbesondere auch eine Ausführung mit mehr oder weniger Fächern 24 und/oder mit unterschiedlich ausgeführten Fächern 24.

Das Bodenelement 12 weist insbesondere einen formstabilen Bereich 11, bspw. eine Platte, und einen flexiblen Bereich 13, bspw. eine Lasche auf. Weitergehend ist es bevorzugt, dass das Deckenelement 14 insbesondere einen formstabilen Bereich 15, bspw. eine Platte, und einen flexiblen Bereich 17, bspw. eine Lasche aufweist. Bevorzugt können die flexiblen Bereiche 13, 17, insbesondere durch ein Aufeinanderzuklappen, miteinander in Verbindung gebracht werden und derart ein Verschließen der Mehrwegverpackung 10 umgesetzt werden. Bspw. können die miteinander verbundenen flexiblen Bereiche 13, 17 durch einen Verschluss 32 miteinander fixiert werden.

Anstelle der dargestellten Ausführung mit offenliegender Frontseite, ist es insbesondere alternativ auch möglich, dass die Mehrwegverpackung 10 eine weitere (nicht dargestellte) Außenwand 16d, insbesondere an der Frontseite, aufweist. Diese Außenwand 16d oder ein Teil einer Außenwand ist zum Öffnen der Verpackung klappbar fest mit dem Bodenelement 12 und lösbar verbindbar mit dem Deckenelement 14; oder klappbar fest mit dem Deckenelement 14 und lösbar verbindbar mit dem Bodenelement 12 verbunden. Die Lösbarkeit ist insbesondere mittels eines Verschlusses umgesetzt.

Die Außenwände 16a-16c, die Zwischenwand 20ist expandierbar ausgeführt, sodass sie höhenverstellbar sind. Die Außenwände 16a-16c, die Zwischenwand 20 sind hierbei zur Umsetzung der Expandierbarkeit als Faltenbalge ausgeführt. Insbesondere durch die Flexibilität der Außenwände 16a und 16c können diese an der vorderen Beladeöffnung zusammengedrückt werden, so dass deren Kanten, die mit den festen Leisten 28 und 30 verstärkt sind, aufeinander liegen und sodann verriegelt werden können, so dass die Verpackung geschlossen ist. Die Mehrwegverpackung 10 kann somit zwischen einem expandierten Zustand und einem kontrahierten Zustand verstellt werden. Somit lässt sich insbesondere vorteilhaft das Packmaß der Mehrwegverpackung 10 und/oder die Größe der Fächer 24 verändern. Der Zwischenboden 22 kann bevorzugt lösbar in den Falten des Faltenbalgs der Außenwände 16a-16c aufliegen, sodass derart eine Fixierung des Zwischenbodens 22 erfolgt.

Dargestellt weisen die Außenwände 16a, 16c, insbesondere gefügt oder einstückig damit ausgeführt, ein Vorspannelement in Form eines Zugband 26 einer Vorspannvorrichtung 25 auf, wobei das Zugband 26 die Außenwände 16a, 16c in dem kontrahierten Zustand vorspannt, und somit die Vorspannvorrichtung 25 insbesondere die Mehrwegverpackung 10 in dem kontrahierten Zustand vorspannt. Somit ist insbesondere ein Selbsteinzug umgesetzt, der dafür sorgt, dass die Mehrwegverpackung 10 durch die Vorspannung in den kontrahierten Zustand zurückkehrt bzw. dort gehalten wird. Die Vorspannvorrichtung 25 kann insbesondere weitere Vorspannelemente aufweisen. Bevorzugt ist es, dass die rückwärtige Außenwand 16b und/oder die Zwischenwand 22 ebenso je ein Vorspannelement, vorzugsweise ein Zugband 26, aufweist.

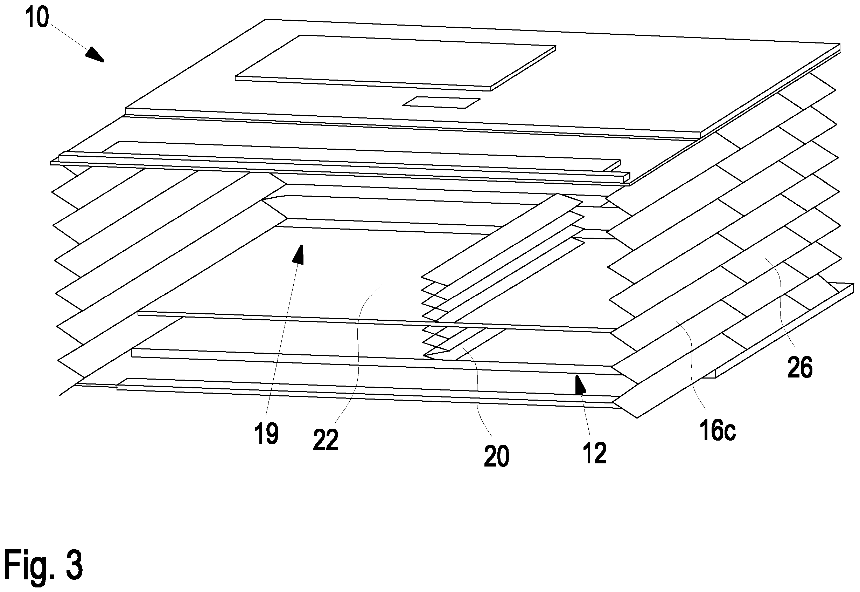

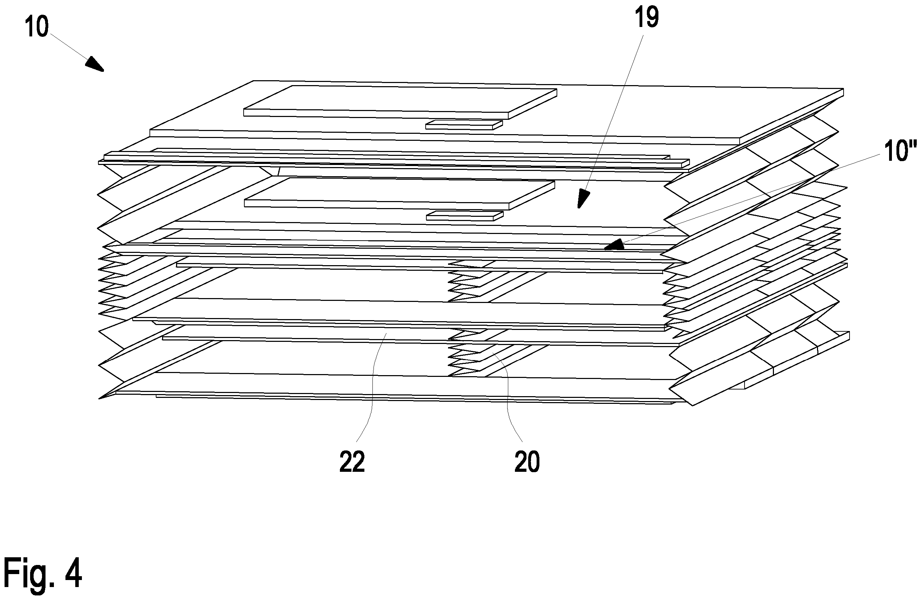

Durch die Lösbarkeit der Zwischenwand 20 kann der Innenraum 19 der Mehrwegverpackung 10 freigelegt werden. So ist es bspw. möglich die Zwischenwand 20 an der Seite 21 mittels des Verschlusses 44 von dem Deckenelement 14 zu lösen und sodann die Zwischenwand 20 auf der Innenseite des Bodenelements 12 abzulegen. Bevorzugt ist hierbei insbesondere der Zwischenboden 22 mitbeweglich, sodass auch der Zwischenboden 22 auf der Innenseite des Bodenelements 12 abzulegen ist. Hierdurch kann der Innenraum freigelegt werden, sodass im Wesentlichen das Gesamtvolumen der Außenhülle 18 zur Aufnahme von zu transportierenden Gegenständen, insbesondere auch zur Aufnahme einer weiteren, vorzugsweise identischen, Mehrwegverpackung 10 (vgl. Fig. 4) zur Verfügung steht. Figur 3 zeigt den freigelegten Zustand der Mehrwegverpackung 10 aus Figur 1.

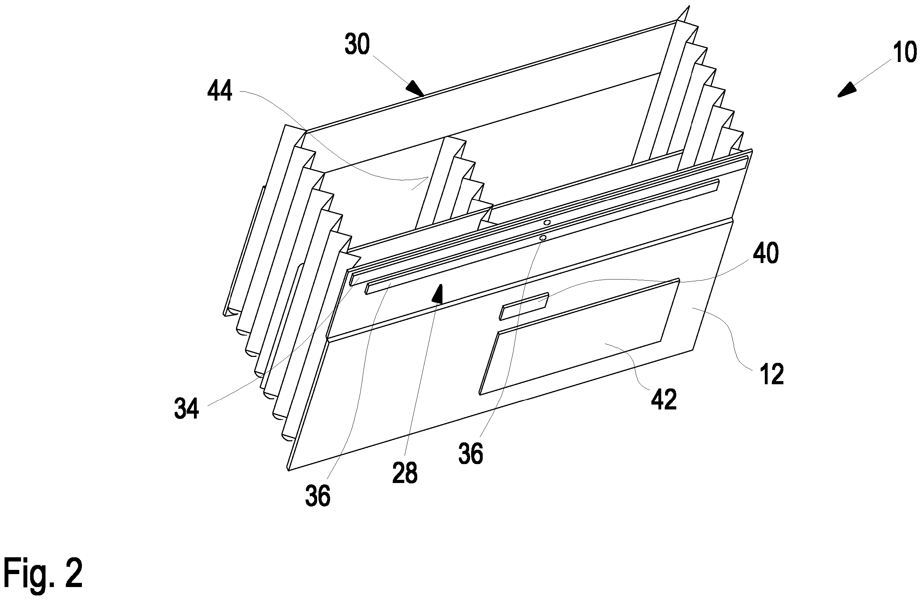

Dargestellt weist die Mehrwegverpackung 10 einen Verschluss 32 zum Fixieren der Mehrwegverpackung 10 in einem kontrahierten Zustand auf. Der Verschluss 32 weist bspw. zwei klappbar miteinander verbundene Elemente 34, 36 (vgl. Fig. 2), insbesondere Scharnierelemente, auf, die mit dem Bodenelement 12, vorzugsweise dem flexiblen Bereich 11 des Bodenelements 12, verbunden sind. Im kontrahierten Zustand der Mehrwegverpackung 10 kann das Element 36 über die Außenseite des Deckenelements 14, vorzugsweise dem flexiblen Bereich 11 des Deckenelements 14, geklappt werden und dort mit einem Gegenstück 30 einen Verschluss herstellen. Bspw. kann ein Magnetverschluss vorliegen, sodass das Element 36 sich magnetische mit dem Gegenstück 30 verbindet und/oder es kann ein einhakender Verschluss erfolgen, bspw. derart, dass die Öse 38 mit einer entsprechenden gegenüberliegenden Öse im Gegenstück 30 z.B. durch eine Durchsteckplombe verbunden werden. Diese handelsüblichen Durchsteckplomben aus z.B. Kunststoff sind für diesen Zweck so ausgelegt, dass sie ohne Werkzeug zerstört werden können und so den Zugriff in die Verpackung ermöglichen, was bei geschlossener Plombe nicht möglich ist.

Das Bodenelement 12, das Deckenelement 14, eine oder mehrere der Außenwände 16a, 16b, 16c, die Zwischenwand 20 und/oder der Zwischenboden 22 sind z.B. bevorzugt aus Polypropylen gefertigt, wobei die Außenwände 16a bis 16c vorzugsweise aus Polypropylengewebe hergestellt werden. Bevorzugt ist das Bodenelement 12, das Deckenelement 14 und/oder der Zwischenboden zumindest teilweise formstabil ausgeführt, bspw. durch eine innenliegende Platte. Der Zwischenboden 22 und/oder der formstabile Bereich 11 des Bodenelements 12 und/oder die formstabile Bereich 15 des Deckenelements 14 weist insbesondere eine Platte, z. B. eine Hohlstrukturplatte auf.

Figur 2 zeigt eine seitliche Ansicht auf die Mehrwegverpackung 10 aus Figur 1.

Dargestellt ist eine Etikettenfläche 42 an dem Bodenelement 12 angeordnet. Die Etikettenfläche 42 weist insbesondere ein oberflächenoptimiertes Element auf, sodass ein vereinfachtes Abziehen von Versandetiketten möglich ist. Alternativ oder zusätzlich kann das Deckelelement 14 die Etikettenfläche aufweisen.

Ferner ist mit dem Bodenelement eine Informationsvorrichtung 44, bspw. in Form eines Barcodes und/oder eines RFID-Tags und/oder eines Displays, zur Wiedergabe von Informationen verbunden.

Figur 3 zeigt den freigelegten Zustand der Mehrwegverpackung 10 aus Figur 1.

Die Zwischenwand 20 befindet sich in kontrahiertem Zustand. Der mit der Zwischenwand 20 verbundene Zwischenboden 22 ist somit im Bereich des Bodenelements 12 zurückgezogen, sodass der Innenraum 19 freiliegt.

Figur 4 zeigt die Mehrwegverpackung 10 aus Figur 1 im freigelegten Zustand des Innenraums 19 (vgl. Fig. 3), wobei eine weitere, insbesondere identische, Mehrwegverpackung 10", vorzugsweise im kontrahierten Zustand, innerhalb der Mehrwegverpackung 10 aufgenommen ist. Möglich ist es somit insbesondere die Mehrwegverpackungen 10, 10" sowie insbesondere weitere (nicht dargestellte) in der Mehrwegverpackung 10 aufgenommene Mehrwegverpackungen gemeinsam zu verpacken, bevorzugt zu transportieren, besonders bevorzugt zu verschicken.

## Patentansprüche

1. Mehrwegverpackung (10), insbesondere Mehrwegtransportverpackung, bspw. zum Transport von Flaschen, Elektro-Platinen oder Lebensmittel, mit
einem Bodenelement (12),
einem Deckenelement (14),
mindestens einer zwischen dem Bodenelement (12) und dem Deckenelement (14) angeordneten Außenwand, sodass durch das Bodenelement (12), das Deckenelement (14) und die mindestens eine Außenwand eine Außenhülle (18) zur, insbesondere allseitig, umschließenden Verpackung für das Transportgut ausgebildet ist, und
mindestens einer innerhalb der Außenhülle (18) angeordneten Zwischenwand (20) zur Unterteilung der Verpackung in mehrere Fächer (24),
wobei die mindestens eine Außenwand und/oder die mindestens eine Zwischenwand (20) expandierbar ausgeführt ist.

2. Mehrwegverpackung (10) nach Anspruch 1, **dadurch gekennzeichnet, dass** das Bodenelement (12), das Deckenelement (14) und/oder ein Querschnitt der Außenhülle (18) im Wesentlichen rechteckig ausgebildet ist.

3. Mehrwegverpackung (10) nach Anspruch 1 oder 2, **dadurch gekennzeichnet, dass** die mindestens eine Außenwand und/oder die mindestens eine Zwischenwand (20) als Faltenbalg ausgebildet ist.

4. Mehrwegverpackung (10) nach einem der Ansprüche 1-3, **gekennzeichnet durch** mindestens eine Vorspannvorrichtung, die so ausgeführt ist, dass sie die mindestens eine Außenwand und/oder die mindestens eine Zwischenwand (20) in einem kontrahierten Zustand vorspannt.

5. Mehrwegverpackung (10) nach Anspruch 4, **dadurch gekennzeichnet, dass** die Vorspannvorrichtung, insbesondere verbunden mit der mindestens eine Außenwand und/oder die mindestens eine Zwischenwand (20) aufweist: eine Zugfeder und/oder ein Zugband (26).

6. Mehrwegverpackung (10) nach einem der Ansprüche 1-5, **gekennzeichnet durch** eine, insbesondere mit dem Bodenelement (12) und dem Deckenelement (14) verbundene Zurrvorrichtung zum, vorzugsweise kontrahierten, Zusammenzurren der Mehrwegverpackung (10).

7. Mehrwegverpackung (10) nach einem der Ansprüche 1-6, **dadurch gekennzeichnet, dass** die mindestens eine Zwischenwand (20) zumindest einseitig lösbar mit der Außenhülle (18), vorzugsweise dem Bodenelement (12) und/oder dem Deckenelement (14), verbunden ist, wobei vorzugsweise die Lösbarkeit der Zwischenwand (20) durch einen Verschluss (44), bspw. einen Klettverschluss und/oder einen Knopfverschluss und/oder einen Ösenverschluss (44) und/oder einen Magnetverschluss umgesetzt ist.

8. Mehrwegverpackung (10) nach einem der Ansprüche 1 bis 7, **gekennzeichnet durch** mindestens einen Zwischenboden (22) zur weiteren Unterteilung der Verpackung in mehrere Fächer (24), wobei vorzugsweise: der mindestens eine Zwischenboden (22) mit der mindestens einen Zwischenwand (20) verbunden, insbesondere fest verbunden, ist.

9. Mehrwegverpackung (10) nach einem der Ansprüche 1 bis 8, **dadurch gekennzeichnet, dass** mindestens eine der Außenwände (16a, 16b, 16c) oder ein Teil einer Außenwand zum Öffnen und Verschließen der Verpackung klappbar mit dem Bodenelement (12) oder dem Deckenelement (14) verbunden ist.

10. Mehrwegverpackung (10) nach einem der Ansprüche 1 bis 9, **dadurch gekennzeichnet, dass** zum Öffnen und Verschließen der Mehrwegverpackung (10) das Bodenelement (12) und/oder das Deckenelement (14), zumindest teilweise klappbar ausgeführt ist, insbesondere derart, dass das Bodenelement (12) mit dem Deckenelement (14) verbindbar ist.

11. Mehrwegverpackung (10) nach einem der Ansprüche 1 bis 10, **gekennzeichnet durch** einen Verschluss (32) zum Fixieren der Mehrwegverpackung (10) in einem kontrahierten Zustand und/oder zum Verschließen einer Öffnung der Mehrwegverpackung (10).

12. Mehrwegverpackung (10) nach einem der Ansprüche 1 bis 11, **gekennzeichnet durch** eine an einer Außenfläche der Mehrwegverpackung (10), insbesondere des Bodenelements (12) und/oder des Deckenelements (14), angeordnete, Etikettenfläche zum Anbringen von Versandetiketten, wobei die Etikettenfläche bevorzugt ein anderes Material, insbesondere mit anderen Hafteigenschaften, als die übrige Außenfläche aufweist.

13. Mehrwegverpackung (10) nach einem der Ansprüche 1 bis 12, **gekennzeichnet durch** eine, insbesondere maschinenlesbare, bspw. einen Barcode und/oder ein RFID-Tag und/oder ein Display aufweisende, Informationsvorrichtung.

14. Mehrwegverpackung (10) nach einem der Ansprüche 1 bis 13, **gekennzeichnet durch** eine, **gekennzeichnet durch** ein, vorzugsweise rutschhemmendes, Dämpfungselement.

15. Mehrwegverpackungssystem mit
einer ersten Mehrwegverpackung (10) nach einem der Ansprüche 1 bis 14, und mindestens einer weiteren Mehrwegverpackung (10), insbesondere nach einem der Ansprüche 1 bis 14,
wobei die mindestens eine weitere Mehrwegverpackung (10), zumindest teilweise, innerhalb der Außenhülle (18) der ersten Mehrwegverpackung (10) angeordnet ist.
